# EUROPEAN PATENT APPLICATION

(11) **EP 3 981 811 A1**
(43) Date of publication of application: **13.04.2022**
(21) Application number: 20818356.6
(22) Date of filing: 05.06.2020
(51) Int. Cl.: C08F 292/00, C08L 101/00, C09D 133/00, C09D 201/00, C09K 3/18, C08F 2/44, C08J 5/18, C08G 18/00, C09D 7/20, C09D 7/62, C09D 7/63

(54) **COMPOSITION**

(30) Priority: 05.06.2019 JP 2019105539
(71) Applicant: Daikin Industries, Ltd., Osaka-shi, Osaka 530-8323 (JP)
(72) Inventor: YAMAGUCHI, Hiroki, Osaka-shi, Osaka 530-8323 (JP); TORTISSIER, Gregory, Osaka-shi, Osaka 530-8323 (JP); MOHARA, Kensuke, Osaka-shi, Osaka 530-8323 (JP); MORITA, Masamichi, Osaka-shi, Osaka 530-8323 (JP)
(74) Representative: Hoffmann Eitle
(86) International application number: PCT/JP2020/022426
(87) International publication number: WO 2020/246607

(57) **Abstract**

A problem to be solved by this disclosure is to provide a composition, preferably a composition for forming a liquid-repellent coating film. This problem is solved by a composition comprising
[1] a polymer constituting a water-repellent component, the polymer containing a constituent unit derived from (A) at least one modified fine particle containing (i) a core fine particle and (ii) one or more modifying moieties that modify the core fine particle, wherein some or all of the one or more modifying moieties have one or more polymerizable groups (a), and a constituent unit derived from (Bs) at least one compound containing one or more polymerizable groups (b) in the molecule, and containing fluorine;
[2] a monomer (Bm) constituting an abrasion-resistant component; and
[3] a solvent mainly containing one or more solvents selected from the group consisting of non-fluorine organic solvents and water,
wherein the ratio of the mass of the abrasion-resistant component [2] to the total mass of the water-repellent component [1] and the abrasion-resistant component [2] is 85:100 to 35:100.

## Description

### Technical Field

The present invention relates to a composition, preferably a composition for forming a liquid-repellent coating film.

### Background Art

Various liquid-repellent coating films have been previously proposed.

As another example, there has been proposed a coating film containing polymers having constituent units based on:
(1) at least one type of fine particle having a polymerizable group; and
(2) at least one type of compound having a polymerizable group, wherein a hydrofluoroether is used as a solvent, and
   wherein the at least one type of fine particle (1) and/or the at least one type of compound (2) have a fluoroalkyl group, and the at least one type of compound (2) is a compound having two or more polymerizable groups in the molecule (Patent Literature (PTL) 1).

### Citation List

### Patent Literature

PTL 1: WO 2016/056663

### Summary of Invention

### Technical Problem

An object of the present invention is to provide a composition that can suppress the use of a fluorine organic solvent (preferably substantially not using a fluorine organic solvent) and that can form a liquid-repellent coating film usable for a wide variety of purposes.

### Solution to Problem

As a result of extensive research, the present inventors found that the above object can be achieved by using a composition comprising:
[1] a polymer constituting a water-repellent component, the polymer containing
   a constituent unit derived from
   (A) at least one modified fine particle containing
      (i) a core fine particle and
      (ii) one or more modifying moieties that modify the core fine particle, wherein some or all of the one or more modifying moieties have one or more polymerizable groups (a), and a constituent unit derived from
   (Bs) at least one compound containing one or more polymerizable groups (b) in the molecule, and containing fluorine;
[2] a monomer (Bm) constituting an abrasion-resistant component; and
[3] a solvent containing one or more solvents selected from the group consisting of non-fluorine organic solvents and water, wherein the ratio of the mass of the abrasion-resistant component [2] to the total mass of the water-repellent component [1] and the abrasion-resistant component [2] is 85:100 to 35:100. Accordingly, the present invention has been accomplished.

The present invention includes the following embodiments.

### Item 1.

A composition comprising
[1] a polymer constituting a water-repellent component, the polymer containing
   a constituent unit derived from
   (A) at least one modified fine particle containing
      (i) a core fine particle and
      (ii) one or more modifying moieties that modify the core fine particle, wherein some or all of the one or more modifying moieties have one or more polymerizable groups (a), and a constituent unit derived from
   (Bs) at least one compound containing one or more polymerizable groups (b) in the molecule, and containing fluorine;
[2] a monomer (Bm) constituting an abrasion-resistant component; and
[3] a solvent mainly containing one or more solvents selected from the group consisting of non-fluorine organic solvents and water,
   wherein
   the ratio of the mass of the abrasion-resistant component [2] to the total mass of the water-repellent component [1] and the abrasion-resistant component [2] is 85:100 to 35:100.

### Item 2.

The composition according to Item 1, comprising a non-fluorine organic solvent.

### Item 3.

The composition according to Item 1 or 2, comprising a fluorine organic solvent in an amount of less than 20 mass%.

### Item 4.

The composition according to any one of Items 1 to 3, comprising a surfactant in an amount of less than 1 mass%.

### Item 5.

The composition according to Item 4, wherein the polymerizable group (a) or (b), or both, represent a radically reactive group.

### Item 6.

The composition according to Item 5, wherein the polymerizable group (a) or (b), or both, represent a vinyl group, a (meth)acrylic group, a styryl group, or a maleimide group.

### Item 7.

The composition according to any one of Items 1 to 6, wherein the core fine particle (i) has a number average primary particle size of 1 to 1500 nm.

### Item 8.

The composition according to Item 7, wherein the core fine particle (i) has a number average primary particle size of 5 to 1000 nm.

### Item 9.

The composition according to any one of Items 1 to 8, wherein the core fine particle (i) is an inorganic particle.

### Item 10.

The composition according to any one of Items 1 to 9, wherein the at least one compound (Bs) is a compound represented by the following formula: 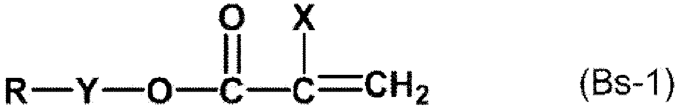 wherein
X is
a hydrogen atom,
a chlorine atom,
a bromine atom,
an iodine atom,
a CX₃ group, wherein X, in each occurrence, is the same or different, and represents a hydrogen atom or a chlorine atom,
a cyano group,
a C₁-C₂₁ linear or branched alkyl group,
a substituted or unsubstituted benzyl group,
a substituted or unsubstituted phenyl group, or
a C₁-C₂₀ linear or branched alkyl group;
Y is
a single bond,
a C₁-C₁₀ hydrocarbon group optionally having an oxygen atom,
a -CH₂CH₂-N(-R^{ya})-SO₂- group, wherein R^{ya} is a C₁-C₄ alkyl group; the right end of the formula being bound to R, and the left end of the formula being bound to O,
a -CH₂CH(-OR^{yb})-CH₂- group, wherein R^{yb} is a hydrogen atom or an acetyl group; the right end of the formula being bound to R, and the left end of the formula being bound to O, or a -(CH₂)ₙ-SO₂- group, wherein n is 1 to 10; the right end of the formula being bound to R, and the left end of the formula being bound to O; and
R is
a hydrocarbon group, the hydrocarbon group optionally having one or more oxygen atoms.

### Item 11.

The composition according to any one of Items 1 to 9, wherein the at least one compound (Bs) is a compound represented by the following formula: 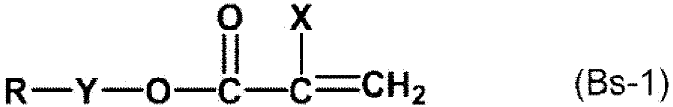 wherein
- R: is CₙF₂ₙ₊₁,
- Y: is -CH₂- or -C₂H₄-,
- X: is hydrogen, and
- n: is a number of 1 or greater, with the proviso that when n is 2 or greater, Y is -C₂H₄-.

### Item 12.

The composition according to Item 11, wherein the at least one compound (Bs) is C₆F₁₃CH₂CH₂OCOC(CH₃)=CH₂.

### Item 13.

The composition according to any one of Items 1 to 12, wherein the non-fluorine organic solvent is at least one solvent selected from the group consisting of alcohol solvents, ketone solvents, ester solvents, ether solvents, and amide solvents.

### Item 14.

The composition according to Item 13, wherein the non-fluorine organic solvent is an alcohol solvent.

### Item 15.

The composition according to Item 14, wherein the non-fluorine organic solvent is isopropyl alcohol.

### Item 16.

A method for producing a water-repellent coating film containing a fluorine-containing water-repellent component and an abrasion-resistant component, the method comprising
(1) preparing a fluorine-containing water-repellent component in a non-fluorine organic solvent to prepare a suspension of the fluorine-containing water-repellent component in the non-fluorine organic solvent,
(2) mixing the solution and a monomer (Bm) for constituting an abrasion-resistant component,
(3) polymerizing the monomer (Bm) to prepare the abrasion-resistant component, and
(4) removing the non-fluorine organic solvent.

### Item 17.

The production method according to Item 16, wherein the fluorine-containing water-repellent component comprises a constituent unit derived from
(A) at least one modified fine particle containing
   (i) a core fine particle and
   (ii) one or more modifying moieties that modify the core fine particle, wherein some or all of the one or more modifying moieties have one or more polymerizable groups (a), and a constituent unit derived from
(B) at least one compound containing one or more polymerizable groups (b) in the molecule, and containing fluorine.

### Item 18.

The production method according to Item 17, wherein the polymerizable group (a) or (b), or both, represent a radically reactive group.

### Item 19.

The production method according to Item 18, wherein the polymerizable group (a) or (b), or both, represent a vinyl group, a (meth)acrylic group, a styryl group, or a maleimide group.

### Item 20.

The production method according to any one of Items 17 to 19, wherein the core fine particle (i) has a number average primary particle size of 5 to 1000 nm.

### Item 21.

The production method according to any one of Items 17 to 20, wherein the fine particle (i) is an inorganic particle.

### Item 22.

The production method according to any one of Items 17 to 21, wherein
the at least one compound (B) is a compound represented by formula (1): 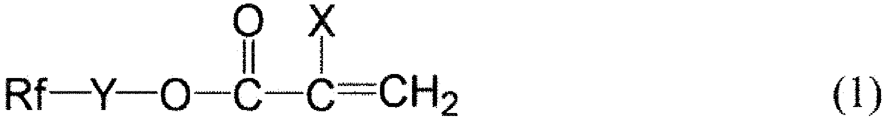 wherein
X is
a hydrogen atom,
a fluorine atom,
a chlorine atom,
a bromine atom,
an iodine atom,
a CFX¹X² group, wherein X¹ and X² are the same or different, and each represents a hydrogen atom, a fluorine atoms, or a chlorine atom,
a cyano group,
a C₁-C₂₁ linear or branched fluoroalkyl group,
a substituted or unsubstituted benzyl group,
a substituted or unsubstituted phenyl group, or
a C₁-C₂₀ linear or branched alkyl group,
Y is
a direct bond,
a C₁-C₁₀ hydrocarbon group optionally having an oxygen atom,
a -CH₂CH₂N(R¹)SO₂- group, wherein R¹ is a C₁-C₄ alkyl group; the right end of the formula being bound to Rf, and the left end of the formula being bound to O,
a -CH₂CH(OY¹)CH₂- group, wherein Y¹ is a hydrogen atom or an acetyl group; the right end of the formula being bound to Rf, and the left end of the formula being bound to O, or
a -(CH₂)ₙSO₂- group, wherein n is 1 to 10; the right end of the formula being bound to Rf, and the left end of the formula being bound to O, and
Rf is
a C₁-C₂₀ linear or branched fluoroalkyl group, or a fluoropolyether group with a molecular weight of 400 to 5000.

### Item 23.

The production method according to Item 22, wherein Rf is a C₁-C₁₀ linear or branched fluoroalkyl group.

### Item 24.

The production method according to Item 23, wherein Rf is a C₁-C₆ linear or branched fluoroalkyl group.

### Item 25.

The production method according to any one of Items 17 to 24, wherein the at least one compound (Bm) is a compound having two or more polymerizable groups (b) in the molecule.

### Item 26.

The production method according to Item 25, wherein the at least one compound (Bm) is a compound having 2 to 8 polymerizable groups (b) in the molecule.

### Item 27.

The production method according to Item 25 or 26, wherein the polymerizable group (b) is, in each occurrence, independently selected from the group consisting of radically polymerizable groups, cationic polymerizable groups, and anionic polymerizable groups.

### Item 28.

The production method according to any one of Items 16 to 27, wherein the non-fluorine organic solvent is at least one member selected from the group consisting of alcohol solvents, non-aromatic hydrocarbon solvents, halogenated hydrocarbon solvents, ester solvents, nitrile solvents, and sulfoxide solvents.

### Item 29.

The production method according to Item 28, wherein the non-fluorine organic solvent is an alcohol solvent.

### Item 30.

The production method according to Item 29, wherein the non-fluorine organic solvent is at least one member selected from the group consisting of methanol, ethanol, n-propanol, and isopropanol.

### Item 31.

The production method according to any one of Items 16 to 30, wherein the coating film has an average surface roughness Ra of 1.6 to 20 µm.

### Item 32.

The production method according to any one of Items 16 to 31, wherein the coating film has a Wenzel roughness factor of 1.6 to 10.

### Item 33.

The production method according to any one of Items 16 to 32, wherein the coating film has a water contact angle of 120° or more.

### Item 34.

The production method according to Item 33, wherein the coating film has a water contact angle of 150° or more.

### Item 35.

The production method according to any one of Items 1 to 34, wherein the coating film has a water contact angle of 100° or more after surface friction with a PET film (under a load of 100 gf/cm², 1500 reciprocations).

### Item 36.

A coating film produced by the production method of any one of Items 1 to 35.

### Item 37.

A method for producing a fluorine-containing water-repellent component comprising a constituent unit derived from
(A) at least one modified fine particle containing
   (i) a core fine particle and
   (ii) one or more modifying moieties that modify the core fine particle, wherein some or all of the one or more modifying moieties have one or more polymerizable groups (a); and a constituent unit derived from
(B) at least one compound containing one or more polymerizable groups (b) in the molecule, and containing fluorine,
   the method comprising
   reacting the modified fine particle (A) with the at least one compound (B) in a non-fluorine organic solvent.

### Item 38.

A method for producing a coating film containing a fluorine-containing water-repellent component and an abrasion-resistant component, and having a static contact angle of water of 150° or more,
the method comprising
(1) mixing a monomer (Bm) for constituting an abrasion-resistant component,
(2) polymerizing the monomer (Bm) to prepare the abrasion-resistant component, and
(3) removing a non-fluorine organic solvent derived from the composition.

### Item 39.

A method for coating an article, comprising forming a coating film on part of the surface or on the entire surface of the article by using the method of Item 38.

### Item 40.

A method for subjecting an article to a liquid repellent treatment, comprising forming a coating film on part of the surface or on the entire surface of the article by using the method of Item 38.

### Advantageous Effects of Invention

The present invention provides, for example, a novel composition, preferably a composition for forming a liquid-repellent coating film.

### Description of Embodiments

### 1. Terms

Unless otherwise specified, the symbols and abbreviations used in this specification can be assumed to have their ordinary meanings used in the technical field to which the present invention pertains, as understood from the context of the specification.

The term "contain" or "comprise" as used herein is intended to include the meanings of consisting essentially of and consisting only of.

The step, treatment, or operation described herein can be performed at room temperature unless otherwise specified.

The term "liquid repellency" as used herein includes water repellency, oil repellency, and a combination of water repellency and oil repellency.

The term "liquid repellency" as used herein includes super liquid repellency.

The term "super liquid repellency" as used herein includes super water repellency, super oil repellency, and a combination of super water repellency and super oil repellency.

The term "fluorine organic solvent" as used herein refers to a solvent consisting essentially of (or consisting only of) an organic compound that contains one or more fluorine atoms in the molecule. The term "fluorine organic solvent" as used herein also includes a fluorine organic solvent in mixed solvents.

The term "non-fluorine organic solvent" as used herein refers to a solvent consisting essentially of (or consisting only of) an organic compound that does not contain fluorine atoms in the molecule. The term "fluorine organic solvent" as used herein also includes a non-fluorine organic solvent in mixed solvents.

Room temperature referred to herein can mean a temperature in the range of 10 to 30°C.

The term "Cₙ-Cₘ" (wherein n and m are numerals) as used herein indicates that the number of carbon atoms is n or more and m or less, as would be generally understood by a person skilled in the art.

The term "polymerizable group" as used herein means a group involved in a polymerization reaction.

The term "polymerization reaction" as used herein means a reaction in which two or more molecules (e.g., two molecules, or three or more molecules) are bonded to form another compound. The "two or more molecules" may be identical to or different from each other.

Examples of the "hydrocarbon group" referred to herein include, unless otherwise specified,
(1) aliphatic (non-aromatic) hydrocarbon groups optionally substituted with one or more aromatic hydrocarbon groups (e.g., benzyl), and
(2) aromatic hydrocarbon groups optionally substituted with one or more aliphatic hydrocarbon groups (e.g., tolyl).

In the present specification, aromatic hydrocarbon groups are sometimes referred to as "aryl groups."

The "hydrocarbon group" referred to herein can be a monovalent or higher valent group.

The hydrocarbon group referred to herein can be cyclic or acyclic (e.g., linear or branched), or a combination thereof, unless otherwise specified.

The "aliphatic hydrocarbon group" referred to herein can be an acyclic hydrocarbon group, a cyclic hydrocarbon group, or a combination thereof, unless otherwise specified. Examples of such combinations include
(1) a cyclic hydrocarbon group substituted with one or more acyclic hydrocarbon groups, and
(2) an acyclic hydrocarbon group substituted with one or more cyclic hydrocarbon groups.

Examples of "aliphatic hydrocarbon groups" referred to herein include alkyl, alkenyl, alkynyl, and cycloalkyl, unless otherwise specified.

Examples of "alkyl groups" referred to herein include linear or branched alkyl groups having 1 to 30 carbon atoms, unless otherwise specified. Specific examples include methyl, ethyl, propyl (e.g., n-propyl, isopropyl), butyl (e.g., n-butyl, isobutyl, sec-butyl, tert-butyl), pentyl (e.g., n-pentyl, tert-pentyl, neopentyl, isopentyl, sec-pentyl, 3-pentyl), hexyl, heptyl, octyl, nonyl, undecyl, dodecyl, tridecyl, tetradecyl, pentadecyl, hexadecyl, heptadecyl, octadecyl, nonadecyl, icosyl, and docosyl.

Examples of "alkenyl groups" referred to herein include linear or branched alkenyl groups having 2 to 30 carbon atoms, unless otherwise specified. Specific examples include vinyl, 1-propenyl, isopropenyl, 2-methyl-1-propenyl, 1-butenyl, 2-butenyl, 3-butenyl, 2-ethyl-1-butenyl, 1-pentenyl, 2-pentenyl, 3-pentenyl, 4-pentenyl, 4-methyl-3-pentenyl, 1-hexenyl, 2-hexenyl, 3-hexenyl, 4-hexenyl, and 5-hexenyl.

Examples of "alkynyl groups" referred to herein include linear or branched alkynyl groups having 2 to 30 carbon atoms, unless otherwise specified. Specific examples include ethynyl, 1-propynyl, 2-propynyl, 1-butynyl, 2-butynyl, 3-butynyl, 1-pentynyl, 2-pentynyl, 3-pentynyl, 4-pentynyl, 1-hexynyl, 2-hexynyl, 3-hexynyl, 4-hexynyl, and 5-hexynyl.

Examples of "cycloalkyl groups" referred to herein include cycloalkyl groups having 3 to 8 carbon atoms, unless otherwise specified. Specific examples include cyclopentyl, cyclohexyl, and cycloheptyl.

Examples of "aromatic hydrocarbon groups" referred to herein include aromatic hydrocarbon groups having 6 to 14 carbon atoms, unless otherwise specified. Specific examples include phenyl, naphthyl, phenanthryl, anthryl, and pyrenyl.

The composition of the present invention is usable in the production of a liquid-repellent coating film.

The composition of the present invention may be in the form of a kit.

The present invention also provides an article having a coating film, a method for coating an article, a method of subjecting an article to a liquid repellent treatment, and a fine particle for forming a coating film.

Below, the present invention is described in the following order.
2. Coating Film Obtained from the Composition of the Present Invention
3. Composition
4. Kit
5. Article
6. Method for Coating Article
7. Method of Subjecting Article to Liquid Repellent Treatment
8. Fine Particles for Forming Coating Film
9. Compound for Forming Coating Film
10. Composition for Forming Coating Film
11. Coating Composition
12. Composition for Liquid Repellent Treatment

### 2. Coating Film Obtained from the Composition of the Present Invention

The coating film obtained from the composition of the present invention is preferably a coating film that has a fluorine content of 1 wt% or more, a water contact angle (droplet: 2 µL) of 115° or more, and a water contact angle of 100° or more after surface friction with a PET film (under a load of 100 g/cm², 1500 reciprocations), and that satisfies at least one of the following surface roughness indices:
an average surface roughness Ra of 1.6 µm or more, and
a Wenzel roughness factor of 1.2 or more.

### 2.1. Physical Properties of Coating Film

### 2.1.1. Composition of Coating Film

### 2.1.1.1. Fluorine Content

The fluorine content of the coating film as referred to herein is defined as the content of fluorine element in an elemental composition determined by X-ray photoelectron spectroscopy (XPS) measurement.

The XPS measurement is performed using a commercially available apparatus (e.g., ESCA3400, product name, produced by Shimadzu Corporation; PHI 5000 VersaProbe II, product name, produced by ULVAC-PHI).

The coating film has a fluorine content of, for example, 1 mass% or more.

Examples of such methods for analyzing the fluorine content of the coating film include
(1) a method comprising partially peeling the coating film from a substrate, and performing analysis; and
(2) a method comprising performing analysis with the coating film being maintained in the state of coating the substrate.
Either of the above methods can be appropriately selected according to, for example, the state of the coating film to be analyzed.

Specific examples of (1) the method comprising partially peeling the coating film from a substrate and performing analysis include a method comprising burning a sample using a flask, and performing analysis using an ion meter.

Specific examples of (2) the method comprising performing analysis with the coating film being maintained in the state of coating the substrate include X-ray photoelectron spectroscopy, energy dispersive X-ray fluorescence analysis using a scanning electron microscope, and the like.

One of these methods can be appropriately selected according to, for example, the state of the coating film to be analyzed.

### 2.1.2. Surface Roughness

The surface roughness of the coating film obtained from the composition of the present invention satisfies at least one of the following regarding surface roughness indices:
(a) an average surface roughness Ra of 1.6 µm or more, and
(b) a Wenzel roughness factor of 1.2 or more.

### 2.1.2.1. Average Surface Roughness Ra

In one preferred embodiment of the present invention, the coating film obtained from the composition of the present invention has an average surface roughness Ra of 1.6 µm or more, preferably 1.6 to 20 µm, more preferably 2.0 to 19.0 µm, and even more preferably 2.5 to 18.0 µm.

This feature can be one of the factors that provide the coating film obtained from the composition of the present invention with higher liquid repellency.

This feature can be one of the factors that provide the coating film obtained from the composition of the present invention with higher durability.

The average surface roughness Ra is a numerical value measured by the following method.

### Measuring Method

The average surface roughness in a quadrangular area of 527.0 µm × 703.0 µm is calculated.

Specifically, the measurement is performed using a VK-9710 (trade name; produced by Keyence Corporation) color 3D laser microscope with an MUL00201 (trade name; produced by Nikon Corporation) microscope unit attached, or their equivalents.

### 2.1.2.2. Wenzel Roughness Factor

In one preferred embodiment of the present invention, the coating film obtained from the composition of the present invention has a Wenzel roughness factor of 1.2 or more, more preferably 1.6 to 10, still more preferably 2.4 to 9, and even more preferably 3.0 to 8.

This feature can be one of the factors that provide the coating film obtained from the composition of the present invention with higher liquid repellency.

This feature can be one of the factors that provide the coating film obtained from the composition of the present invention with higher durability.

"Wenzel roughness factor" is herein used in its usual meaning. The Wenzel roughness factor refers to a ratio of the actual surface area of the coating film to a planar surface area (i.e., geometric surface area) of the coating film. That is, according to the definition thereof, the Wenzel roughness factor is always 1 or more.

The Wenzel roughness factor referred to herein is a numerical value obtained by the following measuring method.

### Measuring Method

The actual surface area is measured in a quadrangular area of 351.4 µm × 351.5 µm, and the Wenzel roughness factor is calculated.

The measurement is performed using a VK-9710 (trade name; produced by Keyence Corporation) color 3D laser microscope with a CF IC EPI Plan MUL00201 (trade name; produced by Nikon Corporation) objective lens attached, or their equivalents.

### 2.1.4. Water Contact Angle

The coating film obtained from the composition of the present invention has a water contact angle of 115° or more, preferably 120° or more, more preferably 130° or more, and even more preferably 150° or more.

The water contact angle referred to herein is a static contact angle of water. The water contact angle is a numerical value obtained by the following measuring method.

### Measuring Method

Using water (droplet: 2 µL), measurement is performed at 5 points per sample using a Drop Master 701 (trade name; produced by Kyowa Interface Science, Inc.) contact angle meter, or the equivalent.

When the static contact angle is 150° or more, the liquid may not be able to be present alone on the surface of the substrate. In that case, a syringe needle is used as a support to measure the static contact angle, and the value obtained accordingly is regarded as the static contact angle.

### 2.1.5. n-Hexadecane Contact Angle

The coating film obtained from the composition of the present invention preferably has an n-hexadecane contact angle (droplet: 2 µL) of preferably 40° or more,
more preferably 50° or more,
even more preferably 60° or more,
still even more preferably 70° or more, and
particularly preferably 80° or more.

In the present specification, n-hexadecane is sometimes abbreviated as "n-HD."

The n-HD contact angle referred to herein is a static contact angle of n-HD. The n-HD contact angle is a numerical value obtained by the following measuring method.

### Measuring Method

Using n-HD (droplet: 2 µL), the measurement is performed at 5 points per sample using a Drop Master 701 (trade name; produced by Kyowa Interface Science, Inc.) contact angle meter, or the equivalent.

When the static contact angle is 150° or more, the liquid may not be able to be present alone on the surface of the substrate. In that case, a syringe needle is used as a support to measure the static contact angle, and the value obtained accordingly is regarded as the static contact angle.

### 2.1.6. Liquid-Repellant Abrasion Resistance of Coating Film

### 2.1.6.1. Water Contact Angle after Surface Friction with PET Film (Under a Load of 100 gf/cm², 1500 Reciprocations)

The water contact angle after surface friction with a PET film of the coating film obtained from the composition of the present invention (under a load of 100 gf/cm², 1500 reciprocations) is 100° or more, preferably 115° or more, more preferably 120° or more, and even more preferably 150° or more.

### 2.1.6.2. Water Contact Angle after Surface Friction with PET Film (Under a Load of 100 gf/cm², 7000 Reciprocations)

In surface friction using a PET film (under a load of 100 gf/cm²), the number of times of surface friction that allows the coating film to maintain a water contact angle of 100° or more is preferably 7000 reciprocations or more.

The contact angle is a numerical value obtained by the following measuring method.

### Measuring Method

A PET film (trade name: PET Film U-46; produced by Toray Industries, Inc.), or the equivalent, is attached to the holder of an abrasion resistance tester (trade name: Rubbing Tester (triple series) 151E; produced by Imoto Machinery Co., Ltd.) (area in contact with a test sample: 1 cm²). The surface of a test sample is wiped by rubbing with the PET film a predetermined number of times under a load of 100 g. The water contact angle is then measured according to the water contact angle measuring method described above.

### 2.2. One Preferred Embodiment of the Coating Film and Composition thereof

The coating film obtained from the composition of the present invention preferably comprises
[1] a polymer constituting a water-repellent component, the polymer containing
   a constituent unit derived from
   (A) at least one modified fine particle containing
      (i) a core fine particle and
      (ii) one or more modifying moieties that modify the core fine particle, wherein some or all of the one or more modifying moieties have one or more polymerizable groups (a), and a constituent unit derived from
   (Bs) at least one compound containing one or more polymerizable groups (b) in the molecule, and containing fluorine; and
[2] a polymer constituting an abrasion-resistant component, the polymer containing
   a constituent unit derived from
   a monomer (Bm);
   wherein the ratio of the mass of the polymer [2] to the total mass of the polymer [1] and the polymer [2] is 85:100 to 35:100.

The fluorine content is preferably 1 mass% or more.

The polymer [1] can mainly function as a water-repellent component, and the polymer [2] can mainly function as an abrasion-resistant component; however, the scope of the present invention is not limited to the above.

Examples of embodiments of the coating film are described below.

### Embodiment E1

The coating film according to one embodiment comprises
[1] a first compound containing, as constituent units,
   (1) a constituent unit derived from modified fine particle (A) and
   (2) a constituent unit derived from compound (Bs)
   (wherein the first compound can be in the form of containing a fine particle); and
[2] a second compound containing, as a constituent unit,
   a constituent unit derived from compound (Bm)
   (wherein the second compound can have a mesh-like structure).

Just to note, the coating film according to this embodiment may contain other compounds. Examples of other such compounds include the first compound in the following embodiment E2.

### Embodiment E2

The coating film according to another embodiment comprises
[1] a first compound containing, as constituent units,
   (1) a constituent unit derived from modified fine particle (A) and
   (2) a constituent unit derived from compound (Bm) (wherein the first compound can have a mesh-like structure containing a fine particle); and,
   if desired, further comprises
[2] a second compound containing, as a constituent unit,
   (1) a constituent unit derived from compound (Bm)
      (wherein the second compound can have a mesh-like structure).

Just to note, the coating film according to this embodiment may contain other compounds. Examples of other such compounds include the first compound in the above embodiment E1.

The coating film according to one embodiment of the present invention preferably has a surfactant content of 1 mass% or less.

The "surfactant" as referred to herein means an organic compound having a hydrophobic part and a hydrophilic part, and having surfactant activity. The "organic compound" as referred to herein means a compound containing at least carbon and hydrogen as constituent atoms, and containing metal and/or metalloid atoms in a proportion of less than 50% in terms of atomicity.

In the present specification, the "metalloid atoms" refer to boron, silicon, germanium, arsenic, antimony, and tellurium.

### 3. Composition

The present invention provides
a composition comprising
[1] a polymer constituting a water-repellent component, the polymer containing
   a constituent unit derived from
   (A) at least one modified fine particle containing
      (i) a core fine particle and
      (ii) one or more modifying moieties that modify the core fine particle, wherein some or all of the one or more modifying moieties have one or more polymerizable groups (a), and a constituent unit derived from
   (Bs) at least one compound containing one or more polymerizable groups (b) in the molecule, and containing fluorine;
[2] a monomer (Bm) constituting an abrasion-resistant component; and
[3] a solvent mainly containing one or more solvents selected from the group consisting of non-fluorine organic solvents and water,
   wherein
   the ratio of the mass of the abrasion-resistant component [2] to the total mass of the water-repellent component [1] and the abrasion-resistant component [2] is 85:100 to 35:100.

The use of this composition enables the production of the coating film described above.

The modified fine particle (A), the polymer (Bs), and the monomer (Bm), and those contained in each of these may be understood by a person skilled in the art from their descriptions with regard to the coating film, in view of common technical knowledge.

The mass of the water-repellent component [1] is substantially the same as the total mass of the materials that constitute the water-repellent component [1], i.e., the modified fine particle (A) and the compound (Bs), as would be generally understood by a person skilled in the art.

The mass of the abrasion-resistant component [2] is substantially the same as the mass of the material that constitutes the abrasion-resistant component [2], i.e., the monomer (Bm), as would be generally understood by a person skilled in the art.

The water-repellent component (or fluorine-containing water-repellent component) can comprise a constituent unit derived from
(A) at least one modified fine particle containing
   (i) a core fine particle and
   (ii) one or more modifying moieties that modify the core fine particle, wherein some or all of the one or more modifying moieties have one or more polymerizable groups (a), and a constituent unit derived from
(B) at least one compound containing one or more polymerizable groups (b) in the molecule, and containing fluorine.

The method for producing the fluorine-containing water-repellent component may be, for example, a production method comprising reacting the modified fine particle (A) with the at least one compound (B) in a non-fluorine organic solvent.

This production method is similar to the production method for the polymer [1] and can be understood from its description based on common technical knowledge.

The non-fluorine organic solvent can be understood by those skilled in the art in view of common technical knowledge and from the description of solvents that can be used in a polymerization reaction with regard to the method for producing the coating film of the present invention described below.

The polymerization reaction is preferably performed in the presence of a solvent.

The "solvent mainly containing one or more solvents selected from the group consisting of non-fluorine organic solvents and water" can contain the "one or more solvents selected from the group consisting of non-fluorine organic solvents and water" typically in an amount of more than 50 mass%, preferably 60 mass% or more, and more preferably 70% mass% or more.

The composition of the present invention preferably contains a non-fluorine organic solvent.

The composition of the present invention can contain a fluorine solvent. The content of the fluorine solvent is preferably less than 20 mass%, more preferably less than 15 mass%, and even more preferably less than 10 mass%.

The composition of the present invention can contain a surfactant. The content of the surfactant is preferably less than 1 mass%, more preferably less than 0.75 mass%, and even more preferably less than 0.5 mass%.

In the composition of the present invention, the ratio of the mass of the abrasion-resistant component [2] to the total mass of the water-repellent component [1] and the abrasion-resistant component [2] is 85:100 to 35:100, preferably 82.5:100 to 36:100, more preferably 80:100 to 37:100, and even more preferably 80:100 to 39:100.

In the present invention, the quantitative ratio of the modified fine particle (A) and the compound (Bs) is preferably 1:0.1 to 1:20, more preferably 1:0.2 to 1:15, and even more preferably 1:0.5 to 1:5.

In the present invention, the quantitative ratio of the modified fine particle (A) and the compound (Bm) is preferably 1:0.03 to 1:2.85, more preferably 1:0.10 to 1:2.5, and even more preferably 1:0.30 to 1:2.

In the present invention, the quantitative ratio of the modified fine particle (Bm) and the compound (Bs) is preferably 1:20 to 1:0.75, more preferably 1:15 to 1:1, and even more preferably 1:10 to 1:2.

The composition according to a preferred embodiment of the present invention is a composition that forms the coating film of the present invention when combined with compound (Bm) having two or more polymerizable groups in the molecule and cured.

The details of the composition of the present invention can be understood by a person skilled in the art from the description below of the coating film and common technical knowledge.

Therefore, it can be understood that the composition can contain substances other than those mentioned below in the description of the coating film.

### 3.2.1. Modified Fine Particle (A)

The modified fine particle (A) contains
(i) a core fine particle and
(ii) one or more modifying moieties that modify the core fine particle.

The mode in which the modifying moiety is bound to the surface of the fine particle is not limited. Examples include covalent bonding, coordination bonding, ionic bonding, hydrogen bonding, and bonding by Van der Waals force.

In the coating film of the present invention, the core fine particle (i) preferably has a number average particle size of 5 to 1000 nm.

In the coating film of the present invention, the core fine particle (i) is an inorganic particle.

Some or all of the one or more modifying moieties have one or more polymerizable groups (a). The proportion of the polymerizable groups (a) to the modifying moiety can be, for example, 10 mol% or more, 30 mol% or more, 50 mol% or more, 70 mol% or more, 90 mol% or more, 95 mol% or more, or 100 mol%.

The number of modifying moieties on the core fine particle (i) of the modified fine particle (A) can be, for example, 1 or more, 2 or more, 3 or more, 5 or more, 7 or more, 10 or more, 15 or more, 30 or more, 50 or more, 70 or more, or 100 or more.

The number of polymerizable groups on the core fine particle (i) of the modified fine particle (A) can be 1 or more, 2 or more, 3 or more, 5 or more, 7 or more, 10 or more, 15 or more, 30 or more, 50 or more, 70 or more, or 100 or more.

### 3.2.1.1. Core Fine Particle (i)

Examples of the core fine particle (i) of the modified fine particle (A) include inorganic fine particles (e.g., silica fine particles, such as porous silica fine particles, and metal oxide fine particles), organic fine particles (e.g., carbon black, fullerene, and carbon nanotubes), and combinations of inorganic fine particles and organic fine particles (e.g., a mixture of two or more types of fine particles).

This feature can be one of the factors that provide the coating film of the present invention with higher liquid repellency.

This feature can be one of the factors that provide the coating film of the present invention with higher durability.

The core fine particle (i) used in the present invention preferably has a number average particle size of 0.5 nm to 1000 nm, more preferably 1 nm to 500 nm, and even more preferably 5 nm to 300 nm.

When the core fine particle (i) has a number average particle size within the range described above, the parameters for the water contact angle, average surface roughness, and Wenzel roughness factor described above can be more easily achieved.

Some or all of the primary particles of the modified fine particle (A) and core fine particle (i) may be aggregated to form a secondary particle in the coating film of the present invention.

The number average particle size can be a number average particle size of particles including the secondary particle and the primary particle (which is a primary particle not in the form of a secondary particle).

The number average particle size of the core fine particle (i) can be measured by the following method.

### Measuring Method

After samples are photographed with a transmission electron microscope or a scanning electron microscope, the diameter of 200 particles or more is measured on photographs, and the arithmetic average value is calculated.

This feature can be one of the factors that provide the coating film of the present invention with higher liquid repellency.

This feature can be one of the factors that provide the coating film of the present invention with higher durability.

When the core fine particle (i) used in the present invention is a porous silica fine particle, the core fine particle (i) in a dry powder state preferably has an apparent density of 0.01 to 0.5 g/cm³, more preferably 0.015 to 0.3 g/cm³, and even more preferably 0.02 to 0.05 g/cm³.

When the porous silica fine particle has an apparent density within the range described above, the parameters for the water contact angle, average surface roughness, and Wenzel roughness factor described above can be more easily achieved.

The apparent density can be measured by the following method.

### Measuring Method

After 0.2 g of a powder sample is placed in a 10-ml measuring cylinder, the volume is measured. The obtained density is defined as the apparent density.

### 3.2.1.2. Polymerizable Group (a) Contained in Modifying Moiety (ii)

Examples of the polymerizable group (a) include radically polymerizable groups, cationic polymerizable groups, and anionic polymerizable groups.

Preferable examples include radically polymerizable groups.

Examples of radically polymerizable groups include a vinyl group, a (meth)acrylic group, a styryl group, and a maleimide group, and groups containing these groups.

Preferable examples include a (meth)acrylic group and a styryl group, and groups containing these groups.

The polymerizable group (ii) can be disposed in a polymerizable state at one or more ends of the modifying moieties.

Examples of the modifying moieties having one or more polymerizable groups (ii) include an alkyl group substituted with one or more polymerizable groups described above (e.g., alkyl groups having 1 to 10 carbon atoms), and a polyether group substituted with one or more polymerizable groups (e.g., polyether groups having 2 to 10 carbon atoms).

This feature can be one of the factors that provide the coating film of the present invention with higher liquid repellency.

This feature can be one of the factors that provide the coating film of the present invention with higher durability.

The modified fine particle (A) does not contain fluorine.

The phrase "not containing fluorine" referred to herein includes substantially not containing fluorine. Specifically, not containing fluorine can mean that the fluorine content is less than 1 mass%.

The modified fine particle (A) can be used singly, or in a combination of two or more.

### 3.2.1.3. Method for Producing Modified Fine Particle (A)

The modified fine particle (A) can be produced by using a known method or a similar method, and appropriately selecting a binding mode as described above.

Examples of usable methods include a method comprising allowing a compound containing (a) one or more polymerizable groups and (b) one or more moieties having reactivity with the particle surface to react with the core fine particle (i)).

The one or more moieties (b) having reactivity with the particle surface can be appropriately selected according to the chemical structure or the state of the surface of the core fine particle (i).

Examples of such reactions include silane coupling.

Specific examples of the method include
(1) a method comprising allowing a hydroxyl group or a silanol group on the silica fine particle to be bound to a functional group in a compound that is to be a modifying moiety (e.g., a method using silane coupling);
(2) a method comprising allowing a metal oxide on the metal particle to be bound to a phosphonic acid moiety in a compound that is to be a modifying moiety; and
(3) a method comprising allowing gold of metal particles containing gold to be bound to a thiol moiety of a compound that is to be a modifying moiety.

### 3.2.2. Compound (B)

In the present invention, compound (B), which contains one or more polymerizable groups (b) in the molecule and does not contain fluorine, can be used singly, or in a combination of two or more.

Of these, at least one compound (B) is a compound containing two or more polymerizable groups in the molecule (compound (Bm)).

Examples of polymerizable group (b) include examples of the polymerizable group (a) described above.

The at least one compound (B) in the coating film of the present invention is preferably (meth)acrylate.

The use of (meth)acrylate more easily achieves the parameters for the water contact angle, average surface roughness, and Wenzel roughness factor described above.

The at least one compound (B) in the coating film of the present invention is preferably C₁-C₂₂ alkyl (meth)acrylate, more preferably C₁₆-C₂₂ alkyl (meth) acrylate, and even more preferably C₁₈-C₂₂ alkyl (meth) acrylate.

The alkyl in the compound (B) is preferably linear.

More preferably, all of the compounds (B) in the coating film of the present invention are C₁-C₂₂ alkyl (meth) acrylate, more preferably C₁₆-C₂₂ alkyl (meth) acrylate, and even more preferably C₁₈-C₂₂ alkyl (meth) acrylate.

The (meth)acrylate content of the coating film of the present invention is preferably 33.5 mass% or more, and more preferably 50.0 mass% or more, based on the entire coating film.

This feature can be one of the factors that provide the coating film of the present invention with higher liquid repellency.

This feature can be one of the factors that provide the coating film of the present invention with higher durability.

### 3.2.2.1. Monomer (Bm) Constituting Abrasion-Resistant Component

The monomer (Bm) for constituting the abrasion-resistant component is, for example, a compound containing 2 or more polymerizable groups (b) in the molecule (compound (Bm)) (also referred to as a "polyfunctional polymerizable compound" or "polyfunctional crosslinkable compound"), and is preferably a compound containing 2 to 8 polymerizable groups (b), more preferably 3 to 6 polymerizable groups (b), and even more preferably 3 polymerizable groups (b), in the molecule, in view of abrasion resistance of the coating film of the present invention.

The compound (Bm) is preferably a three-dimensionally crosslinkable compound.

"Three-dimensionally crosslinkable" means that the compound can form a three-dimensional structure by a polymerization reaction.

When a three-dimensionally crosslinkable compound is used as compound (Bm), the parameter regarding the water contact angle after surface friction with a PET film (under a load of 100 gf/cm²; 1500 reciprocations) can be more easily achieved.

The polymerizable group (b) is preferably capable of binding to the modified fine particle (A).

When a group capable of binding to the modified fine particle (A) is used as the polymerizable group (b), the parameter for the water contact after surface friction with a PET film (under a load of 100 gf/cm², 1500 reciprocations) can be more easily achieved.

Examples of the polymerizable group (b) include radically polymerizable groups, cationic polymerizable groups, and anionic polymerizable groups.

Particularly preferable examples of the polymerizable group (b) include radically polymerizable groups. Radically polymerizable groups are preferable in terms of versatility and/or reactivity.

The polymerizable group (a) and polymerizable group (b) of modified fine particle (A) are preferably groups that react on the same principle.

Examples of preferred embodiments include an embodiment in which the polymerizable group (a) is a radically polymerizable group, and the polymerizable group (b) is also a radically polymerizable group.

Examples of radically polymerizable groups include a vinyl group, a (meth)acrylic group, a styryl group, and a maleimide group.

Preferable examples of radically polymerizable groups include a (meth)acrylic group and a styryl group. These radically polymerizable groups are preferable in terms of versatility and/or reactivity.

Examples of the compound (Bm) include a compound represented by the following formula (Bm-1).

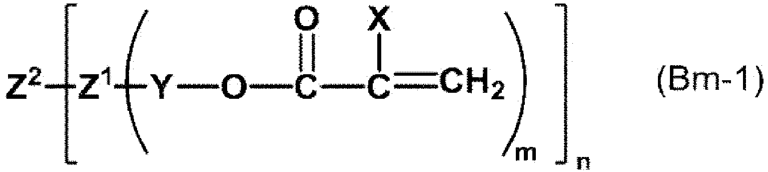

In the above formula,
X is a hydrogen atom, a bromine atom, an iodine atom, a CX₃ group (wherein X, in each occurrence, is the same or different, and represents a hydrogen atom or a chlorine atom), a cyano group, a C₁-C₂₁ linear or branched alkyl group, a substituted or unsubstituted benzyl group, a substituted or unsubstituted phenyl group, or a C₁-C₂₀ linear or branched alkyl group;
Y is a direct bond, a C₁-C₁₀ hydrocarbon group optionally having an oxygen atom, a -CH₂CH₂N(R¹)SO₂ group (wherein R¹ represents a C₁-C₄ alkyl group; the right end of the formula being bound to Z¹, and the left end of the formula being bound to O),
a -CH₂CH(OY¹)CH₂ group (wherein Y¹ is a hydrogen atom or an acetyl group; the right end of the formula being bound to Z¹, and the left end of the formula being bound to O), or a -(CH₂)ₙSO₂- group (wherein n is 1 to 10; the right end of the formula being bound to Z¹, and the left end of the formula being bound to O);
Z¹, in each occurrence, is the same or different, and represents a hydrocarbon group having a valency of m+1 (wherein the hydrocarbon group may contain one or more oxygen atoms), a carbon atom, or an oxygen atom;
Z², in each occurrence, is the same or different, and represents a hydrocarbon group having a valency of n (wherein the hydrocarbon group optionally contains one or more oxygen atoms), a carbon atom, or an oxygen atom;
m is an integer from 1 to 3;
n is an integer of 1 to 4 (preferably 2 to 4); and
the product of m and n is 2 or more (preferably 2 to 4).

In formula (Bm-1), the hydrocarbon of Z¹ and Z² can be cyclic or acyclic, and can be linear or branched.

In formula (Bm-1), the hydrocarbon of Z¹ and Z² is preferably a hydrocarbon having 1 to 10 carbon atoms, more preferably 1 to 6 carbon atoms, and even more preferably 1 to 2 carbon atoms.

Specific examples of the compound represented by the above formula (Bm-1) include the following compounds:

CH₃-CH₂-C-(CH₂OCO-CH=CH₂)₃ (trimethylolpropane triacrylate, TMPTA), C(-CH₂OCO-CH=CH₂)₄, and O[-CH₂(-CH₂OCO-CH=CH₂)₃]₂.

The coating film of the present invention has the various physical properties described above, which can be obtained by copolymerization using the modified fine particle (A) and the compound (Bm).

This, in particular, physical properties regarding structural characteristics, can relate to excellent abrasion resistance of the coating film of the present invention.

The quantitative ratio of compound (Bm) to modified fine particle (A) can be appropriately adjusted within a range that does not significantly impair the effect of the present invention.

Specifically, the amount of compound (Bm) to be used is usually 5 to 1000 parts by weight, preferably 10 to 750 parts by weight, and more preferably 20 to 500 parts by weight, based on 100 parts by weight of the fine particle.

The compound (Bm) can be used singly, or in a combination of two or more.

### 3.2.2.2. Compound Having One Polymerizable Group in the Molecule (Compound (Bs))

In the production of the coating film of the present invention, in addition to the modified fine particle (A) and the compound (Bm), at least one compound having one polymerizable group in the molecule (compound (Bs)) (also referred to as a "monofunctional polymerizable compound") can be further copolymerized.

Examples of the polymerizable groups include radically polymerizable groups, cationic polymerizable groups, and anionic polymerizable groups.

Particularly preferable examples of polymerizable groups include radically polymerizable groups. Radically polymerizable groups are preferable in terms of versatility and/or reactivity.

Examples of radically polymerizable groups include a vinyl group, a (meth)acrylic group, a styryl group, and a maleimide group.

Preferred examples of radically polymerizable groups include a (meth)acrylic group and a styryl group in terms of versatility and/or reactivity.

Examples of the compound (Bs) include compounds represented by the following formula (Bs-1).

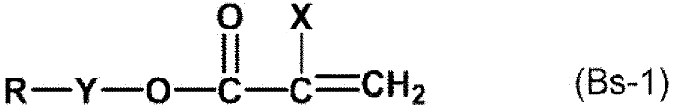

In the formula,
X is a hydrogen atom, a chlorine atom, a bromine atom, an iodine atom, a -CX₃ group (wherein X, in each occurrence, is the same or different, and represents a hydrogen atom or a chlorine atom), a cyano group, a C₁-C₂₁ linear or branched alkyl group, a substituted or unsubstituted benzyl group, a substituted or unsubstituted phenyl group, or a C₁-C₂₀ linear or branched alkyl group;
Y is a single bond, a C₁-C₁₀ hydrocarbon group optionally having an oxygen atom, a -CH₂CH₂-N(-R^{ya})-SO₂- group (wherein R^{ya} is a C₁-C₄ alkyl group, the right end of the formula being bound to R, and the left end of the formula being bound to O), a -CH₂CH(-OR^{yb})-CH₂-group (wherein R^{yb} represents a hydrogen atom or an acetyl group, the right end of the formula being bound to R, and the left end of the formula being bound to O), or a -(CH₂)ₙ-SO₂- group (wherein n is 1 to 10, the right end of the formula being bound to R, and the left end of the formula being bound to O); and R is a hydrocarbon group optionally having one or more oxygen atoms).

In formula (Bs-1), the hydrocarbon group can be cyclic or acyclic, and can be linear or branched.

In formula (Bs-1), the hydrocarbon group is preferably a hydrocarbon group having 1 to 22 carbon atoms, more preferably 16 to 22 carbon atoms, and even more preferably 18 to 22 carbon atoms.

Preferable examples of the compound (Bs) include compounds represented by the following formula (Bs-1): 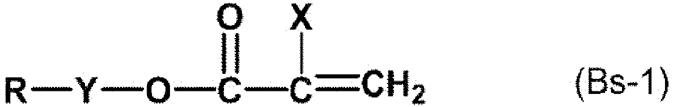 wherein
- R: is CₙF₂ₙ₊₁,
- Y: is -CH₂- or -C₂H₄-,
- X: is hydrogen, and
- n: is a number of 1 or greater, with the proviso that when n is 2 or greater, Y is -C₂H₄-.

Specific examples of compounds represented by the above formula (Bs-1) include the following compounds:
CH₃O-CO-C(-CH₃)=CH₂ (methyl methacrylate),
C₂H₅O-CO-C(-CH₃)=CH₂ (ethyl methacrylate),
C₃H₇O-CO-C(-CH₃)=CH₂ (propyl methacrylate),
C₄H₉O-CO-C(-CH₃)=CH₂ (butyl methacrylate),
C₆H₁₃O-CO-C(-CH₃)=CH₂ (hexyl methacrylate),
C₈H₁₇O-CO-C(-CH₃)=CH₂ (octyl methacrylate),
C₁₂H₂₅O-CO-C(-CH₃)=CH₂ (lauryl methacrylate),
CH₃O-CO-CH=CH₂ (methyl acrylate),
C₂H₅O-CO-CH=CH₂ (ethyl acrylate),
C₃H₇O-CO-CH=CH₂ (propyl acrylate),
C₄H₉O-CO-CH=CH₂ (butyl acrylate),
C₆H₁₃O-CO-CH=CH₂ (hexyl acrylate),
C₈H₁₇O-CO-CH=CH₂ (octyl acrylate),
C₁₂H₂₅O-CO-CH=CH₂ (lauryl acrylate),
C₁₈H₃₇O-CO-CH=CH₂ (stearyl acrylate),
C₂₂H₄₅O-CO-CH=CH₂ (benzyl acrylate)

The compound (Bs) can be used singly, or in a combination of two or more.

The quantitative ratio of compound (Bs) (a monofunctional polymerizable compound) to compound (Bm) (a polyfunctional polymerizable compound) can be appropriately adjusted within the range that does not significantly impair the effect of the present invention.

Specifically, the compound (Bs) can be usually used in an amount of 5 to 1000 parts by weight, preferably 10 to 500 parts by weight, and more preferably 20 to 300 parts by weight, per 100 parts by weight of the compound (Bm).

### 3.2.3. Object to Which the Coating Film Is Applied

The material to which the coating film of the present invention is applied is not limited. Examples include glass, resins (e.g., natural resins and synthetic resins), metals (e.g., simple metals, such as aluminum, copper, and iron, and composites such as alloys), ceramic, semiconductors (e.g., silicon, germanium), fiber, fur, leather, wood, porcelain, stone, and building components.

The form of the material to which the coating film of the present invention is applied is not limited, and may be main plates, films, or other forms.

For example, when the material is fiber, the fiber may be in the form of a woven fabric or a non-woven fabric.

### 3.2.4. Method of Producing the Coating Film

A method for producing the coating film is described.

The coating film of the present invention can be obtained by curing a curable component contained in a composition containing the modified fine particle (A) and the compound (B) (for example, the composition of the present invention described above or below) on the surface to be treated.

The coating film of the present invention according to one embodiment may be a coating film comprising a constituent unit derived from:
(A) at least one modified fine particle containing
   (i) a core fine particle and
   (ii) one or more modifying moieties that modify the core fine particle, wherein some or all of the one or more modifying moieties have one or more polymerizable groups (a), and not containing fluorine; and
      a constituent unit derived from:
(B) at least one compound containing one or more polymerizable groups (b) in the molecule, and not containing fluorine.

The at least one compound (B) is preferably a compound (Bm) containing at least two polymerizable groups in the molecule.

The at least one compound (B) can be more preferably, for example, a compound represented by formula (1): 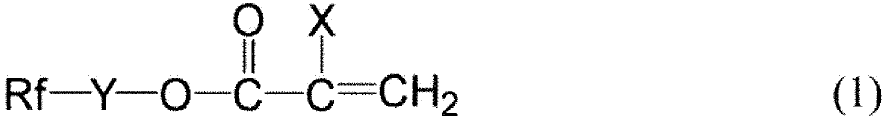 wherein
X is a hydrogen atom, a fluorine atom, a chlorine atom, a bromine atom, an iodine atom, a CFX¹X² group (wherein X¹ and X² are the same or different, and each represents a hydrogen atom, a fluorine atoms, or a chlorine atom), a cyano group, a C₁-C₂₁ linear or branched fluoroalkyl group, a substituted or unsubstituted benzyl group, a substituted or unsubstituted phenyl group, or a C₁-C₂₀ linear or branched alkyl group,
Y is a direct bond, a C₁-C₁₀ hydrocarbon group optionally having an oxygen atom,
a -CH₂CH₂N(R¹)SO₂- group, wherein R¹ is a C₁-C₄ alkyl group; the right end of the formula being bound to Rf, and the left end of the formula being bound to O,
a -CH₂CH(OY¹)CH₂- group, wherein Y¹ is a hydrogen atom or an acetyl group; the right end of the formula being bound to Rf, and the left end of the formula being bound to O, or
a -(CH₂)ₙSO₂- group, wherein n is 1 to 10, the right end of the formula being bound to Rf, and the left end of the formula being bound to O, and
Rf is a C₁-C₂₀ linear or branched fluoroalkyl group, or a fluoropolyether group with a molecular weight of 400 to 5000.

Rf is preferably, for example, a C₁-C₁₀ linear or branched fluoroalkyl group.

Rf is more preferably, for example, a C₁-C₆ linear or branched fluoroalkyl group.

The curable component can be cured, for example, by a polymerization reaction of a polymerizable compound as the curable component.

The compound (Bm) can suitably function as the curable component or polymerizable compound.

The coating film of the present invention can be produced, for example, by one embodiment of a method for producing a coating film described below, or a similar method.

One embodiment of the method for producing a coating film according to the present invention comprises
(1) a step of allowing one or more compounds (Bs) to bind to modified fine particle (A) to obtain fine particle (A^{b}) having at least one polymerizable group (a);
(2) a step of applying a composition containing fine particle (A^{b}) obtained in the step (1) and compound (Bm) to a surface to be treated; and
(3) a step of polymerizing compound (Bm) on the surface to be treated.

As a modification of one embodiment of the method for producing a coating film of the present invention, the compound (Bm) can be used in place of some or all of the one or more compounds (Bs).

In this case, step (1) may be performed on the surface to be treated.

Step (2) may be performed simultaneously with step (1) on the surface to be treated.

The reaction conditions in step (1) may be set based on common technical knowledge in accordance with the type of polymerizable group (a) on the modified fine particle (A), and the type of compound (Bs) (i.e., the type of binding reaction).

The application or coating of the composition to the surface to be treated in step (2) can be performed by using a known application or coating method (e.g., brushing, spraying, spin coating, bar coating, and a method using a dispenser).

If necessary, various primer treatments can be performed on the surface to be treated beforehand in order to facilitate the application.

Among these, application by spraying or bar coating is preferable. In particular, application by spraying is particularly preferable because the parameters for the water contact angle, average surface roughness, and Wenzel roughness factor described above can be more easily achieved.

In step (3), the coating film of the present invention can be produced by bringing the composition into contact with an object to be treated, and then curing a curable component by a polymerization reaction.

The compound (Bm) can form a coating film as described above.

Some or all of the modified fine particle (A) may be chemically bound to the coating film.

The modified fine particle (A) chemically bonded to the coating film can be chemically retained in the coating film as part of the coating film. This contributes to the coating film having the physical properties described above.

On the other hand, the modified fine particle (A) chemically bound to the coating film can be physically (i.e., non-chemically) retained in the coating film as part of the coating film. This contributes to the coating film having the physical properties described above.

When the composition is cured by a polymerization reaction, the polymerization reaction can be performed in the presence or absence of a polymerization initiator.

When the compound represented by formula (2) is used, a polymerization initiator is preferably used.

Examples of preferable polymerization initiators include polymerization initiators that generate radicals or cations upon irradiation with electromagnetic waves in the wavelength range of 350 nm or less (e.g., ultraviolet rays, electron beams, X-rays, or γ-rays), and that function as a catalyst that initiates curing (a crosslinking reaction) of a carbon-carbon double bond of a polymer. In general, a polymerization initiator that generates radicals or cations upon irradiation with ultraviolet rays can be used. In particular, a polymerization initiator that generates radicals upon irradiation with ultraviolet rays can be used.

Examples of the polymerization initiator include the following compounds:
Acetophenone-based polymerization initiators: acetophenone, chloroacetophenone, diethoxyacetophenone, hydroxyacetophenone, α-aminoacetophenone, hydroxypropiophenone, 2-methyl-1-[4-(methylthio)phenyl]-2-morpholinepropane-1-one, and the like;
Benzoin-based polymerization initiators: benzoin, benzoin methyl ether, benzoin ethyl ether, benzoin isopropyl ether, benzoin isobutyl ether, benzyl dimethyl ketal, and the like;
Benzophenone-based polymerization initiators: benzophenone, benzoylbenzoic acid, methyl benzoyl benzoate, 4-phenylbenzophenone, hydroxybenzophenone, hydroxypropylbenzophenone, acrylated benzophenone, Michler's ketone, and the like;
2,2-Dimethoxy-1,2-diphenylethan-1-one, 1-hydroxycyclohexyl-phenyl-ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, and 2-benzyl-2-dimethylamino-1-(4-morpholinophenyl)-butanone-1,2-(dimethylamino)-2-[(4-methylphenyl)methyl]-1-[4-(4-morpholinyl)phenyl]-1-butanone;
Thioxanthone-based polymerization initiators: thioxanthone, chlorothioxanthone, methylthioxanthone, diethylthioxanthone, dimethylthioxanthone, and the like.

Others: benzyl, α-acyloxime ester, acylphosphine oxide, glyoxy ester, 3-ketocoumarin, 2-ethylanthraquinone, camphorquinone, anthraquinone, and the like.

In addition to the initiators that generate radicals by light energy, such as electromagnetic waves, initiators that generate radicals by heat energy can also be used.

The initiators that generate radicals by heat energy can be known polymerization initiators for a thermal radical polymerization reaction.

Examples include azo-based initiators, such as azobisisobutyronitrile, methyl azoisobutyrate, and azobisdimethylvaleronitrile; and other initiators, such as benzoyl peroxide, potassium persulfate, ammonium persulfate, benzophenone derivatives, phosphine oxide derivatives, benzoketone derivatives, phenylthioether derivatives, azide derivatives, diazo derivatives, and disulfide derivatives.

These polymerization initiators can be used singly, or in a combination of two or more.

The amount of the polymerization initiator used is not limited. In general, the amount of the polymerization initiator is preferably about 0.01 to 10 parts by weight, and more preferably about 3 to 7 parts by weight, per 100 parts by weight of the monomer component.

Examples of the polymerization method that can be performed in the absence of a polymerization initiator include methods of polymerization using heat, electron beams, γ-rays, etc.

Specifically, for example, the polymerization can be performed using heat and/or electromagnetic waves in the wavelength region of 350 nm or less (e.g., ultraviolet rays, electron beams, X-rays, and γ-rays).

The polymerization reaction can be performed by dividing the reaction into two or more stages.

In this case, for example, at least one compound (Bm) is preferably polymerized on the object to be treated at the final stage of the two or more stages. Specifically, after the fine particle (A) and compound (Bs) are polymerized, polymerization using compound (Bm) can be performed.

The polymerization conditions, such as polymerization temperature and polymerization time, can be appropriately adjusted according to the type and amount of monomer component used, the type and amount of polymerization initiator used, and the like. The polymerization reaction can be usually performed at a temperature of about 50 to 100°C for 4 to 10 hours.

The coating film of the present invention can be produced by bringing the composition into contact with the object to be treated, and then curing the curable component. When the composition comprises
(1) a modified fine particle (A), and
(2) a compound (Bmi) containing an isocyanate group as a polyfunctional crosslinkable compound (Bm) that is a curable component,
   the coating film of the present invention can be produced by preparing the modified fine particle (A), then preparing a solution in which the modified fine particle (A) and compound (Bmi) containing an isocyanate group are present together; and spreading the solution over the object to be treated.

When the composition is cured using the modified fine particle (A) and compound (Bmi), heat is preferably applied.

The heating time can be set to an appropriate time.

The reaction temperature is preferably, for example, 30°C to 300°C, and more preferably 40°C to 270°C.

The reaction time is, for example, preferably 1 second to 2 hours, and more preferably 5 seconds to 1 hour and 30 minutes.

To form a coating film with higher durability, it is preferable that before treatment with the composition, the substrate is preferably washed with a solvent, such as acetone, isopropyl alcohol (IPA), hydrofluoroether, or a mixed solvent thereof, to remove contaminants from the surface of the substrate, and then dried.

Further, for silicon substrates or metal substrates, in addition to the above washing, chemical cleaning using an acid (e.g., hydrochloric acid, nitric acid, and hydrogen fluoride), UV ozone, etc., or physical cleaning using sandblasting, glass beads, plasma, etc. is also useful to remove the oxide film formed on the surface to improve durability.

More preferably, in view of enhancing abrasion resistance, the surface is modified with a compound capable of being chemically adsorbed onto the washed substrate, and having in its structure a site capable of chemically reacting with the composition.

In the polymerization reaction, if necessary, a catalyst activator for the reaction between a hydroxyl group and an isocyanate group can be further used.

In particular, when the compound (Bmi) is used as a polyfunctional crosslinkable compound, such a catalyst is preferably used.

Examples include organic titanium compounds (e.g., titanium tetra-2-ethylhexoxide and titanium diisopropoxybis(ethyl acetoacetate)); and
organic zirconia compounds (e.g., zirconium tetraacetylacetonate and zirconium dibutoxybis(ethylacetoacetate)).

These compounds are commercially available. Examples include Orgatix TA-30 (Matsumoto Fine Chemical Co., Ltd.), TC-750 (Matsumoto Fine Chemical Co., Ltd.), ZC-580 (Matsumoto Fine Chemical Co., Ltd.), and ZC-700 (Matsumoto Fine Chemical Co., Ltd.).

The polymerization reaction is preferably performed in the presence of a solvent.

Examples of the solvents include
alcohol solvents such as methanol, ethanol, n-propanol, and isopropanol;
non-aromatic hydrocarbon solvents such as pentane, hexane, heptane, octane, cyclohexane, decahydronaphthalene, n-decane, isododecane, and tridecane;
aromatic hydrocarbon solvents such as benzene, toluene, xylene, tetralin, veratrol, diethylbenzene, methylnaphthalene, nitrobenzene, o-nitrotoluene, mesitylene, indene, and diphenyl sulfide;
ketones such as acetone, methyl ethyl ketone, methyl isobutyl ketone, acetophenone, propiophenone, diisobutyl ketone, and isophorone;
halogenated hydrocarbon solvents such as dichloromethane, chloroform, and chlorobenzene;
ether solvents such as diethyl ether, tetrahydrofuran, diisopropyl ether, methyl t-butyl ether, dioxane, dimethoxyethane, diglyme, phenetole, 1,1-dimethoxycyclohexane, and diisoamyl ether;
ester solvents such as ethyl acetate, isopropyl acetate, diethyl malonate, 3-methoxy-3-methylbutyl acetate, γ-butyrolactone, ethylene carbonate, propylene carbonate, dimethyl carbonate, and α-acetyl-γ-butyrolactone;
nitrile solvents such as acetonitrile and benzonitrile; sulfoxide solvents such as dimethyl sulfoxide and sulfolane; and amide solvents such as N,N-dimethylformamide, N,N-dimethylacetamide, N-methylpyrrolidone, 1,3-dimethyl-2-imidazolidinone, N,N-dimethylacrylamide, N,N-dimethyl acetoacetamide, N,N-diethylformamide, and N,N-diethyl acetamide; and
a combination of two or more of these solvents.

Preferable examples of the solvents include
alcohol solvents (e.g., methanol, ethanol, n-propanol, and isopropanol);
ketone solvents (e.g., methyl ethyl ketone (MEK), methyl isobutyl ketone (MIBK), acetone, diethyl ketone, and dipropyl ketone); ester solvents (e.g., ethyl acetate, methyl acetate, propyl acetate, butyl acetate, and ethyl lactate);
ether solvents (e.g., tetrahydrofuran, methyltetrahydrofuran, dioxane); and
amide solvents (e.g., dimethylformamide (DMF) and dimethylacetamide).

These solvents can be used singly, or in a combination of two or more.

The amount of solvent can be appropriately determined to allow the reaction to proceed appropriately, based on common technical knowledge.

### 4. Kit

The present invention also provides a kit comprising
(A) at least one modified fine particle containing a core fine particle and one or more polymerizable groups (a) on the surface of the particle, and not containing fluorine; and
(Bs) at least one compound containing one polymerizable group (b) in the molecule, and not containing fluorine; and further comprising
(Bm) at least one compound containing two or more polymerizable groups (b) in the molecule, and not containing fluorine,
   the compound (Bm) being disposed apart from the modified fine particle (A) and compound (Bs).

The details of the kit of the present invention can be understood by a person skilled in the art from the above description of the coating film and common technical knowledge.

Therefore, it can be understood that the kit may contain other substances mentioned above in the description of the coating film.

The kit of the present invention can appropriately contain such substances in a mixed state, or in a state in which they are separated from each other.

### 5. Article

The present invention also provides an article having the coating film of the present invention on part of the surface or on the entire surface of the article.

The details of the article of the present invention can be understood by a person skilled in the art from the above description of the coating film and common technical knowledge.

### 6. Method for Coating Article

The present invention also provides a method for coating an article, comprising the step of forming the coating film of the present invention on part of the surface or on the entire surface of the article.

The details of the method for coating the article according to the present invention can be understood by a person skilled in the art from the above description of the coating film and common technical knowledge.

### 7. Method of Subjecting Article to Liquid Repellent Treatment

The present invention further provides a method of subjecting an article to a liquid repellent treatment, the method comprising the step of forming the coating film of the present invention on part of the surface or on the entire surface of the article.

The details of the method of subjecting an article to a liquid repellent treatment according to the present invention can be understood by a person skilled in the art from the above description of the coating film and common technical knowledge.

The present invention further provides a method of subjecting an article to a liquid repellent treatment, the method comprising the step of applying, to part of the surface or to the entire surface of the article,
(A) at least one modified fine particle containing a core fine particle and one or more polymerizable groups (a) on the surface of the particle, and not containing fluorine and
(B) at least one compound containing one or more polymerizable groups (b) in the molecule, and not containing fluorine; or a reaction product of particle (A) and compound (B); and
(Bm) at least one compound containing two or more polymerizable groups (b) in the molecule, and not containing fluorine.

The details of the method of subjecting an article to a liquid repellent treatment can be understood by a person skilled in the art from the above description of the coating film and common technical knowledge.

### 8. Fine Particle for Forming Coating Film

The present invention further provides a fine particle for forming the coating film of the present invention, the fine particle containing one or more polymerizable groups, and not containing a fluorine atom.

The details of the fine particle of the article of the present invention can be understood by a person skilled in the art from the above description of the coating film and common technical knowledge.

### 9. Compound for Forming Coating Film

The present invention also provides a compound for forming the coating film of the present invention, the compound containing one or more polymerizable groups, and not containing a fluorine atom.

The present invention further provides a compound for forming the coating film of the present invention, the compound containing two or more polymerizable groups, and not containing a fluorine atom.

The details of these compounds for forming the coating film of the present invention can be understood by a person skilled in the art from the above description of the coating film and common technical knowledge.

### 10. Composition for Forming Coating Film

The present invention also provides a composition for forming the coating film of the present invention, the composition comprising at least one member selected from the group consisting of:
(A) at least one modified fine particle containing a core fine particle, and one or more polymerizable groups (a) on the surface of the particle, and not containing fluorine; and
(B) at least one compound containing one or more polymerizable groups (b) in the molecule, and not containing fluorine; or
a reaction product of the fine particle (A) and the compound (B); and
(Bm) at least one compound containing two or more polymerizable groups (b) in the molecule, and not containing fluorine.

### 11. Coating Composition

The present invention further provides a coating composition comprising at least one member selected from the group consisting of:
(A) at least one modified fine particle containing a core fine particle and one or more polymerizable groups (a) on the surface of the particle, and not containing fluorine; and
(B) at least one compound containing one or more polymerizable groups (b) in the molecule, and not containing fluorine; or a reaction product of particle (A) and compound (B); and (Bm) at least one compound containing two or more polymerizable groups (b) in the molecule, and not containing fluorine.

The details of the liquid repellent treatment composition of the present invention can be understood by a person skilled in the art from the above description of the coating film and common technical knowledge.

### 12. Composition for Liquid Repellent Treatment

The present invention further provides a composition for liquid repellent treatment, the composition comprising at least one member selected from the group consisting of:
(A) at least one modified fine particle containing a core fine particle and one or more polymerizable groups (a) on the surface of the particle, and not containing fluorine; and
(B) at least one compound containing one or more polymerizable groups (b) in the molecule and not containing fluorine; or
a reaction product of particle (A) and compound (B); and
(Bm) at least one compound containing two or more polymerizable groups (b) in the molecule, and not containing fluorine.

The details of the composition for liquid repellent treatment according to the present invention can be understood by a person skilled in the art from the above description of the coating film and common technical knowledge.

### 13. Composition

The present invention also provides a composition comprising:
(A) at least one modified fine particle containing a core fine particle and one or more polymerizable groups (a) on the surface of the particle, and not containing fluorine;
(B) at least one compound containing one or more polymerizable groups (b) in the molecule, and not containing fluorine; or
a reaction product of particle (A) and compound (B); and
(Bm) at least one compound containing two or more polymerizable groups (b) in the molecule, and not containing fluorine; and comprising a surfactant in an amount of 10 mass% or less (preferably 5 mass% or less, 4 mass% or less, 3 mass% or less, 2 mass% or less, or 1 mass% or less);
wherein the compound (A), compound (B), and compound (Bm) are in the state of being dissolved or dispersed in the liquid medium.

The details of the composition can be understood by a person skilled in the art from the description of the present specification and common technical knowledge.

Examples of the liquid medium can be the same as the examples of solvents mentioned above in the polymerization reaction.

The amount of the liquid medium is preferably 0.1 to 30 mass%, more preferably 0.2 to 20 mass%, and even more preferably 0.3 to 15 mass%, based on the total amount of the compound (A), compound (B), and compound (Bm).

In the present specification, "(the state of) being dissolved or dispersed" means a state in which a homogenous state is visually observed 10 minutes or more after stirring (that is, a state in which a non-homogenous state is not macroscopically observed).

### Examples

The present invention is described in more detail with reference to Examples. However, the scope of the invention is not limited to these Examples.

The meanings of symbols and abbreviations in the examples are shown below.

The present invention is described in more detail below with reference to Examples and Comparative Examples; however, the present invention is not limited to these.

The meanings of the symbols and abbreviations in the Examples are as follows.
AIBN: azobisisobutyronitrile
TMPTA: trimethylolpropane triacrylate

### Solution A1: Preparation of solution of copolymer of Rf(C6)methacrylate and fine particle using isopropyl alcohol as a solvent

39.63 g of C₆F₁₃CH₂CH₂OCOC (CH₃) =CH₂ (which may be abbreviated below as "Rf(C6)methacrylate"), 20.12 g of silica fine particles having a radically reactive group on the surface and having a number average primary particle size of 12 nm, and 536.37 g of isopropyl alcohol (which may be abbreviated below as "IPA") were placed in a reactor equipped with a stirrer. The reactor was purged with nitrogen and heated to 80°C. Further, 1.96 g of AIBN was added thereto, and the mixture was reacted for 6 hours.

### Solution A2 (Comparative Example): Preparation of solution of copolymer of Rf(C6)methacrylate and fine particle using fluorine organic solvent Novec 7200 as a solvent

49.55 g of Rf(C6)methacrylate, 24.72 g of silica fine particles having a radically reactive group on the surface and having a number average primary particle size of 12 nm, and 924.38 g of Novec 7200 were placed in a reactor equipped with a stirrer. The reactor was purged with nitrogen and heated to 70°C. Further, 2.51 g of AIBN was added thereto, and the mixture was reacted for 6 hours.

### Test Example A

Coating films were formed by using solution A1 and solution A2 (Comparative Example), and the physical properties of the coating films were determined according to the methods described for each property.

### Measurement of Contact Angle: Test Examples A1 and A2

Solution A1 and solution A2 (Comparative Example) were diluted with the solvents that had been used to prepare each solution, so that the solid concentrations were adjusted to 4 wt%. Aluminum substrates (plates having a smooth surface according to visual observation) were treated by a dipping method, air-dried for 10 minutes, and then heat-treated at 80°C for 5 minutes to prepare coating films. The contact angles of water and oil (n-HD) of the coating films were measured. The results confirmed that both of the coating films had a water contact angle of 150° or more, exerting super water repellency, and also had an oil contact angle of 90° or more.

**Table 1**

| | Material used for forming a coating film | Water | Oil |
|---|---|---|---|
| Test Example A1 | Solution A1 | 158° | 105° |
| Test Example A2 | Solution A2 (Comparative Example) | 161° | 103° |

### Evaluation of Abrasion Resistance: Test Examples A3 to A8

Super-water-repellent coating films with abrasion resistance were prepared by performing UV treatment or heat treatment using the prepared solutions. Examples of the preparation (examples of coating films) and examples of the results of abrasion resistance test are described below.

The conditions for the preparation and testing of each coating film are described below.

### Preparation of Coating Film with Abrasion Resistance by UV Treatment

### Coating Film Example A3

0.498 g of trimethylolpropane triacrylate (which may be abbreviated below as "TMPTA"), 0.101 g of 2-methyl-1-(4-methylthiophenyl)-2-morpholinopropan-1-one as an alkylphenone-based photopolymerization initiator, and 37.50 g of the solution of Example A1 adjusted to have a solids content of 4 wt% were placed in a vial and mixed to prepare a solution. Then, an aluminum substrate (a plate having a smooth surface according to visual observation) was treated by a spraying method, followed by irradiation with ultraviolet rays at an integrated light amount of 1,800 mJ/cm² using a UV irradiation device, thus producing a coating film sample.

### Preparation of Coating Film with Abrasion Resistance by Heat Treatment

### Coating Film Example A4

0.86 g of the isocyanurate structure of hexamethylene diisocyanate, 0.044 g of titanium diisopropoxy bis(ethyl acetoacetate) as a curing accelerator, 19.53 g of butyl acetate, and 39.45 g of the solution of Example A1 adjusted to have a solids content of 6.5 wt% were placed in a vial and mixed to prepare a solution. Then, an aluminum substrate (a plate having a smooth surface according to visual observation) was treated by a spraying method, followed by heat treatment in an oven at 130°C for 1 hour, thus producing a coating film sample.

### Coating Film Examples A5 and A6

Coating film samples of Coating Film Examples A5 and A6 were prepared in the same manner as in Test Examples A3 and A4, respectively, except that neither UV irradiation nor heat treatment was performed.

### Evaluation of Abrasion Resistance

A PET film (U-46, product name, produced by Toray Industries, Inc.) was mounted on the holder of a rubbing tester (151E abrasion resistance tester, triple series; produced by Imoto Machinery Co., Ltd.; area in contact with a test sample: 1 cm²). The surface of each test sample of the Examples listed in the following table was abraded a predetermined number of times under a load of 100 g/cm². The water contact angle of the coating film sample was then measured to evaluate the abrasion resistance. The abrasion resistance here was defined as the number of times of abrasion in which the average static contact angle in five measurements was 150° or more.

**Table 2**

| | Material used for forming a coating film | Treatment for imparting abrasion resistance | Number of times of abrasion |
|---|---|---|---|
| Coating film A3 | Solution A1 | UV | 10000 or more |
| Coating film A4 | Solution A1 | Heat | 7000 or more |
| Coating film A5 (Comp. Ex.) | Solution A2 | None | 500 or less |
| Coating film A6 (Comp. Ex.) | Solution A2 | | 500 or less |

The results of Test Examples A1 to A6 revealed that the performance (water repellency, abrasion resistance) of the coating films formed of a dispersion prepared with an organic solvent was equivalent to the performance of the coating films formed of a dispersion prepared with a conventionally used fluorine organic solvent. This confirmed that the present invention has the potential to contribute to reducing the cost of super-water-repellent materials and expanding applications.

### Solution B1: Preparation of solution of copolymer of Rf(C6)methacrylate and fine particle using water as a main solvent

4.00 g of C₆F₁₃CH₂CH₂OCOC(CH₃)=CH₂ (which may be abbreviated below as "Rf(C6)methacrylate"), 2.00 g of silica fine particles having a radically reactive group on the surface and having a number average primary particle size of 12 nm, 17.67 g of isopropyl alcohol (which may be abbreviated below as "IPA"), and 52.24 g of water were placed in a reactor equipped with a stirrer. The reactor was purged with nitrogen and heated to 80°C. Further, 0.20 g of V-50 was added thereto, and the mixture was reacted for 6 hours.

### Solution B2 (Comparative Example): Preparation of solution of copolymer of Rf(C6)methacrylate and fine particle using Novec 7200 as a solvent

49.55 g of Rf(C6)methacrylate, 24.72 g of silica fine particles having a radically reactive group on the surface and having a number average primary particle size of 12 nm, and 924.38 g of Novec 7200 were placed in a reactor equipped with a stirrer. The reactor was purged with nitrogen and heated to 70°C. Further, 2.51 g of AIBN was added thereto, and the mixture was reacted for 6 hours.

### Test Examples B1 to B6

Coating films were formed by using solution B1 and solution B2 (Comparative Example), and the physical properties of the coating films were determined according to the methods described for each property.

### Measurement of Contact Angle: Test Examples B1 and B2

Solution B1 and solution B2 (Comparative Example) were diluted with the solvents that had been used to prepare each solution, so that the solid concentrations were adjusted to 4 wt%. Using the resulting solutions, aluminum substrates (plates having a smooth surface according to visual observation) were treated by a dipping method, air-dried for 10 minutes, and then heat-treated at 80°C for 5 minutes to prepare coating films.

The contact angles of water and oil (n-HD) of the prepared coating films were measured. The results confirmed that both of the coating films had a water contact angle of 150° or more, exerting super water repellency, and also had an oil contact angle of 90° or more.

**Table 3**

| | Material used for forming a coating film | Water | Oil |
|---|---|---|---|
| Test Example B1 | Solution B1 | 153° | 95° |
| Test Example B2 | Solution B2 | 161° | 103° |

### Evaluation of Abrasion Resistance: Test Examples B3 to B6

Super-water-repellent coating films with abrasion resistance were prepared by performing heat treatment using the prepared solutions. The conditions for the preparation and testing of each coating film are described below.

### Preparation of Durable Coating Film by Heat Treatment

### Test Example B3

1.25 g of a solution of 70 wt% blocked isocyanate in dipropylene glycol dimethyl ether and 48.75 g of the solution of Example B1 adjusted to have a solids content of 4 wt% were placed in a vial and mixed to prepare a solution. Using this solution, an aluminum substrate (a plate having a smooth surface according to visual observation) was treated by a spraying method. The resulting product was then allowed to stand in an oven at 130°C for 1 hour. A coating film of the solution of Comparative Example B1 was also prepared in the same manner, except that the introduced amount was 37.51 g.

### Test Example B4

0.87 g of the isocyanurate structure of hexamethylene diisocyanate, 0.045 g of titanium diisopropoxy bis(ethyl acetoacetate) as a curing accelerator, 19.42 g of butyl acetate, and 39.51 g of the solution of Comparative Example B1 adjusted to have a solids content of 6.5 wt% were placed in a vial and mixed to prepare a solution. Then, an aluminum substrate (a plate having a smooth surface according to visual observation) was treated by a spraying method, followed by heat treatment in an oven at 130°C for 1 hour.

Test Examples B5 and B6 were produced in the same manner as in Test Examples B1 and B2, respectively, except that heat treatment was not performed.

### Evaluation of Abrasion Resistance

For evaluation of abrasion resistance, a PET film (U-46, product name, produced by Toray Industries, Inc.) was mounted on the holder of a rubbing tester (151E abrasion resistance tester, triple series; produced by Imoto Machinery Co., Ltd.; area in contact with a test sample: 1 cm²). The surface of each test sample of the Examples listed in the following table was abraded a predetermined number of times under a load of 100 g/cm². The water contact angle of the coating film sample was then measured to evaluate the abrasion resistance to wiping. The abrasion resistance here was defined as the number of times of abrasion in which the average static contact angle in five measurements was 150° or more.

**Table 4**

| | Material used for forming a coating film | Treatment for imparting abrasion resistance | Number of times of abrasion |
|---|---|---|---|
| Coating film B3 | Solution B1 | Heat | 7000 or more |
| Coating film B4 | Solution B2 | | 7000 or more |
| Coating film B5 (Comp. Ex.) | Solution B2 | None | 500 or less |
| Coating film B6 (Comp. Ex.) | Solution B2 | | 500 or less |

The results of Test Examples B1 to B6 revealed that the performance (water repellency, abrasion resistance) of the coating films formed of a dispersion prepared using water as a main solvent was equivalent to the performance of the coating films formed of a dispersion prepared with a conventionally used fluorine organic solvent.

This confirmed that the present invention has the potential to contribute to reducing the cost of super-water-repellent materials and expanding applications.

## Claims

1. A composition comprising
[1] a polymer constituting a water-repellent component, the polymer containing
a constituent unit derived from
(A) at least one modified fine particle containing
(i) a core fine particle and
(ii) one or more modifying moieties that modify the core fine particle, wherein some or all of the one or more modifying moieties have one or more polymerizable groups (a), and a constituent unit derived from
(Bs) at least one compound containing one or more polymerizable groups (b) in the molecule, and containing fluorine;
[2] a monomer (Bm) constituting an abrasion-resistant component; and
[3] a solvent mainly containing one or more solvents selected from the group consisting of non-fluorine organic solvents and water,
wherein
the ratio of the mass of the abrasion-resistant component [2] to the total mass of the water-repellent component [1] and the abrasion-resistant component [2] is 85:100 to 35:100.

2. The composition according to claim 1, comprising a non-fluorine organic solvent.

3. The composition according to claim 1 or 2, comprising a fluorine organic solvent in an amount of less than 20 mass%.

4. The composition according to any one of claims 1 to 3, comprising a surfactant in an amount of less than 1 mass%.

5. The composition according to claim 4, wherein the polymerizable group (a) or (b), or both, represent a radically reactive group.

6. The composition according to claim 5, wherein the polymerizable group (a) or (b), or both, represent a vinyl group, a (meth)acrylic group, a styryl group, or a maleimide group.

7. The composition according to any one of claims 1 to 6, wherein the core fine particle (i) has a number average primary particle size of 1 to 1500 nm.

8. The composition according to claim 7, wherein the core fine particle (i) has a number average primary particle size of 5 to 1000 nm.

9. The composition according to any one of claims 1 to 8, wherein the core fine particle (i) is an inorganic particle.

10. The composition according to any one of claims 1 to 9, wherein the at least one compound (Bs) is a compound represented by the following formula: 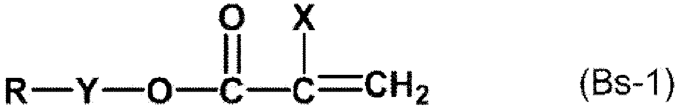 wherein
X is
a hydrogen atom,
a chlorine atom,
a bromine atom,
an iodine atom,
a CX₃ group, wherein X, in each occurrence, is the same or different, and represents a hydrogen atom or a chlorine atom,
a cyano group,
a C₁-C₂₁ linear or branched alkyl group,
a substituted or unsubstituted benzyl group,
a substituted or unsubstituted phenyl group, or
a C₁-C₂₀ linear or branched alkyl group;
Y is
a single bond,
a C₁-C₁₀ hydrocarbon group optionally having an oxygen atom,
a -CH₂CH₂-N(-R^{ya})-SO₂- group, wherein R^{ya} is a C-C₄ alkyl group; the right end of the formula being bound to R, and the left end of the formula being bound to 0,
a -CH₂CH(-OR^{yb})-CH₂- group, wherein R^{yb} is a hydrogen atom or an acetyl group; the right end of the formula being bound to R, and the left end of the formula being bound to 0, or
a -(CH₂)ₙ-SO₂- group, wherein n is 1 to 10; the right end of the formula being bound to R, and the left end of the formula being bound to O; and
R is
a hydrocarbon group, the hydrocarbon group optionally having one or more oxygen atoms.

11. The composition according to any one of claims 1 to 9, wherein the at least one compound (Bs) is a compound represented by the following formula: 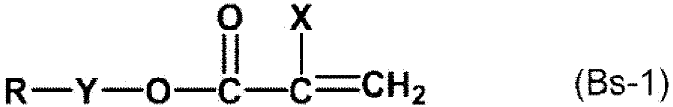 wherein
R is CₙF₂ₙ₊₁,
Y is -CH₂- or -C₂H₄-,
X is hydrogen, and
n is a number of 1 or greater, with the proviso that when n is 2 or greater, Y is -C₂H₄-.

12. The composition according to claim 11, wherein the at least one compound (Bs) is C₆F₁₃CH₂CH₂OCOC(CH₃)=CH₂.

13. The composition according to any one of claims 1 to 12, wherein the non-fluorine organic solvent is at least one solvent selected from the group consisting of alcohol solvents, ketone solvents, ester solvents, ether solvents, and amide solvents.

14. The composition according to claim 13, wherein the non-fluorine organic solvent is an alcohol solvent.

15. The composition according to claim 14, wherein the non-fluorine organic solvent is isopropyl alcohol.

16. A method for producing a water-repellent coating film containing a fluorine-containing water-repellent component and an abrasion-resistant component, the method comprising
(1) preparing a fluorine-containing water-repellent component in a non-fluorine organic solvent to prepare a suspension of the fluorine-containing water-repellent component in the non-fluorine organic solvent,
(2) mixing the solution and a monomer (Bm) for constituting an abrasion-resistant component,
(3) polymerizing the monomer (Bm) to prepare the abrasion-resistant component, and
(4) removing the non-fluorine organic solvent.

17. The production method according to claim 16, wherein the fluorine-containing water-repellent component comprises a constituent unit derived from
(A) at least one modified fine particle containing
(i) a core fine particle and
(ii) one or more modifying moieties that modify the core fine particle, wherein some or all of the one or more modifying moieties have one or more polymerizable groups (a), and a constituent unit derived from
(B) at least one compound containing one or more polymerizable groups (b) in the molecule, and containing fluorine.

18. The production method according to claim 17, wherein the polymerizable group (a) or (b), or both, represent a radically reactive group.

19. The production method according to claim 18, wherein the polymerizable group (a) or (b), or both, represent a vinyl group, a (meth)acrylic group, a styryl group, or a maleimide group.

20. The production method according to any one of claims 17 to 19, wherein the core fine particle (i) has a number average primary particle size of 5 to 1000 nm.

21. The production method according to any one of claims 17 to 20, wherein the fine particle (i) is an inorganic particle.

22. The production method according to any one of claims 17 to 21, wherein
the at least one compound (B) is a compound represented by formula (1): 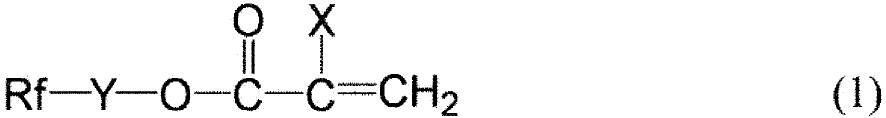 wherein
X is
a hydrogen atom,
a fluorine atom,
a chlorine atom,
a bromine atom,
an iodine atom,
a CFX¹X² group, wherein X¹ and X² are the same or different, and each represents a hydrogen atom, a fluorine atoms, or a chlorine atom,
a cyano group,
a C₁-C₂₁ linear or branched fluoroalkyl group,
a substituted or unsubstituted benzyl group,
a substituted or unsubstituted phenyl group, or
a C₁-C₂₀ linear or branched alkyl group,
Y is
a direct bond,
a C₁-C₁₀ hydrocarbon group optionally having an oxygen atom,
a -CH₂CH₂N(R¹)SO₂- group, wherein R¹ is a C₁-C₄ alkyl group; the right end of the formula being bound to Rf, and the left end of the formula being bound to O,
a -CH₂CH(OY¹)CH₂- group, wherein Y¹ is a hydrogen atom or an acetyl group; the right end of the formula being bound to Rf, and the left end of the formula being bound to O, or
a -(CH₂)SO₂- group, wherein n is 1 to 10; the right end of the formula being bound to Rf, and the left end of the formula being bound to O, and
Rf is
a C₁-C₂₀ linear or branched fluoroalkyl group, or
a fluoropolyether group with a molecular weight of 400 to 5000.

23. The production method according to claim 22, wherein Rf is a C₁-C₁₀ linear or branched fluoroalkyl group.

24. The production method according to claim 23, wherein Rf is a C₁-C₆ linear or branched fluoroalkyl group.

25. The production method according to any one of claims 17 to 24, wherein the at least one compound (Bm) is a compound having two or more polymerizable groups (b) in the molecule.

26. The production method according to claim 25, wherein the at least one compound (Bm) is a compound having 2 to 8 polymerizable groups (b) in the molecule.

27. The production method according to claim 25 or 26, wherein the polymerizable group (b) is, in each occurrence, independently selected from the group consisting of radically polymerizable groups, cationic polymerizable groups, and anionic polymerizable groups.

28. The production method according to any one of claims 16 to 27, wherein the non-fluorine organic solvent is at least one member selected from the group consisting of alcohol solvents, non-aromatic hydrocarbon solvents, halogenated hydrocarbon solvents, ester solvents, nitrile solvents, and sulfoxide solvents.

29. The production method according to claim 28, wherein the non-fluorine organic solvent is an alcohol solvent.

30. The production method according to claim 29, wherein the non-fluorine organic solvent is at least one member selected from the group consisting of methanol, ethanol, n-propanol, and isopropanol.

31. The production method according to any one of claims 16 to 30, wherein the coating film has an average surface roughness Ra of 1.6 to 20 µm.

32. The production method according to any one of claims 16 to 31, wherein the coating film has a Wenzel roughness factor of 1.6 to 10.

33. The production method according to any one of claims 16 to 32, wherein the coating film has a water contact angle of 120° or more.

34. The production method according to claim 33, wherein the coating film has a water contact angle of 150° or more.

35. The production method according to any one of claims 1 to 34, wherein the coating film has a water contact angle of 100° or more after surface friction with a PET film (under a load of 100 gf/cm², 1500 reciprocations).

36. A coating film produced by the production method of any one of claims 1 to 35.

37. A method for producing a fluorine-containing water-repellent component comprising a constituent unit derived from
(A) at least one modified fine particle containing
(i) a core fine particle and
(ii) one or more modifying moieties that modify the core fine particle, wherein some or all of the one or more modifying moieties have one or more polymerizable groups (a); and a constituent unit derived from
(B) at least one compound containing one or more polymerizable groups (b) in the molecule, and containing fluorine,
the method comprising
reacting the modified fine particle (A) with the at least one compound (B) in a non-fluorine organic solvent.

38. A method for producing a coating film containing a fluorine-containing water-repellent component and an abrasion-resistant component, and having a static contact angle of water of 150° or more,
the method comprising
(1) mixing a monomer (Bm) for constituting an abrasion-resistant component,
(2) polymerizing the monomer (Bm) to prepare the abrasion-resistant component, and
(3) removing a non-fluorine organic solvent derived from the composition.

39. A method for coating an article, comprising forming a coating film on part of the surface or on the entire surface of the article by using the method of claim 38.

40. A method for subjecting an article to a liquid repellent treatment, comprising forming a coating film on part of the surface or on the entire surface of the article by using the method of claim 38.
